Europäisches Patentamt

(19) European Patent Office

Office européen des brevets

(11) Numéro de publication: **0 106 376**
**B1**

(12) **FASCICULE DE BREVET EUROPÉEN**

(45) Date de publication du fascicule du brevet:
13.08.86

(21) Numéro de dépôt: **83201157.1**

(22) Date de dépôt: **04.08.83**

(51) Int. Cl.⁴: **C 22 B 60/02,** C 01 G 43/00

(54) Procédé et installation pour ré-extraire, en plusieurs étages successifs, de l'uranium d'un extractant.

(30) Priorité: **13.08.82 LU 84333**

(43) Date de publication de la demande:
**25.04.84 Bulletin 84/17**

(45) Mention de la délivrance du brevet:
**13.08.86 Bulletin 86/33**

(84) Etats contractants désignés:
**BE FR GB IT NL**

(56) Documents cité:
**EP-A-0 031 172**
**US-A-3 737 513**

**IND. ENG. CHEM. PROCESS DES. DEVELOP.,** vol. **11,** no. **1, 1972 F.J. HURST** et al. **"Recovery of uranium from wet-process-phosphoric acid",** pages **122-128**

(73) Titulaire: **Prayon Développement Société anonyme, rue Joseph Wauters, 144, B-4130 Engis (BE)**

(72) Inventeur: **Davister, Armand Laurent, Quai de la Boverie 98/091, B-4000 Liège (BE)**
Inventeur: **Dubreucq, André Robert, rue Basse Marquet 105, B-4240 Saint- Georges (BE)**
Inventeur: **Sart, Michel Armand, rue Neuve Voie 4, B-4130 Engis (BE)**

(74) Mandataire: **Callewaert, Jean, Bureau Gevers S.A. rue de Livourne, 7 - Bte 1, B-1050 Bruxelles (BE)**

**0 106 376**

**Description**

La présente imvention est relative à un procédé pour ré-extraire, en plusieurs étages successifs, de l'uranium d'un extractant comprenant un acide dialkylphosphorique et un oxyde de trialkylphosphine dissous dans un solvant organique non miscible à l'eau, à l'aide d'une solution aqueuse d'acide phosphorique contenant des ions ferreux, chaque étage comprenant les étapes suivantes:

a) la mise en contact de l'extractant dans le solvant organique avec la solution aqueuse d'acide phosphorique, une fraction de cette solution aqueuse étant formée par de la solution recyclée chargée d'uranium, en produisant ainsi une phase organique appauvrie en uranium et une phase agueuse d'acide phosphorique enrichie en uranium et en ions ferriques;

b) la séparation de la phase organique appauvrie en uranium de la phase aqueuse enrichie en uranium;

c) le recyclage d'une fraction de la phase aqueuse enrichie em uranium résultant de l'étape (b) vers l'étape (a) et

d) l'ajustage de la teneur en ions ferreux de la fraction recyclée en mettant la phase aqueuse enrichie en uranium et résultant de l'étape (b) en contact avec du fer métallique.

Un procédé pour réaliser la ré-extraction d'uranium d'un tel extractant est entre autre connu par le brevet aux Etats-Unis d'Amérique N° 3.737.513, la demande de brevet européen N° 0031172 et l'article "Recovery of Uranium from Wet-Process Phoshoric Acid" PAR F.J. Hurst et al. dans la revue "Industrial and Engineering Chemistry: Process Design and Development" Volume II, N° 1, 1972.

· Tous ces procédés présentent cependant divers inconvénients relativement importants.

Ainsi, ces procédés connus conduisent à l'obtention d'une phase aqueuse uranifère dont la teneur en $Fe^{2+}$ + $Fe^{3+}$ est comprise entre 25 et 45 g/l suivant la teneur en $Fe^{2+}$ + $Fe^{3+}$ de l'acide pré-réduit utilisé pour la ré-extraction.

Or, il est bien connu dans la chimie de la fabrication de l'acide phosphorique que la solubilité du $Fe^{3+}$ dans l'acide phosphorique est faible et que, pour des acides phosphoriques d'une teneur en $P_2O_5$ de 30 à 35 %, la limite de solubilité se situe aux environs de 25 g/l de $Fe^{3+}$

Toute teneur supérieure à cette limite donne lieu à la précipitation massive de sels ferriques du type $FeH_3(PO_4)_2 \, 4H_2O$.

Lors de la récupération ultérieure de l'uranium de la phase aqueuse uranifère par le procédé bien connu, qui consiste à oxyder le $U^{4+}$ en $U^{6+}$, à extraire le $U^{6+}$ avec un extractant constitué d'une solution de $D_2EHPA$ et de Topo dans un diluant aliphatique inerte et à ré-extraire le $U^{6+}$ par une solution aqueuse de $(NH_4)_2 \, CO_3$, la première opération consiste à oxyder cette phase aqueuse uranifère de sorte que la totalité du $Fe^{2+}$ + $Fe^{3+}$ se retrouve à l'état de $Fe^{3+}$ et des précipités de type $FeH_3(PO_4)_24H_2O$ se forment des que la teneur $Fe^{2+}$ + $Fe^{3+}$ est supérieure à 25 g/l de Fe.

Ces précipités se déposent dans les divers appareillages, créent des obstructions dans les tuyauteries et les orifices de règlage de débit, de sorte que la conduite des opérations ultérieures est gravement compromise. Cette précipitation apparaît également au cours de l'opération de ré-extraction elle-même avec les mêmes effets néfastes dès que la teneur en $Fe^{3+}$ dépasse 25 g/l.

Par ailleurs, le procédé suivant le brevet aux Etats-Unis d'Amérique N° 3.737.513 nécessite des précautions très importantes du point de vue de sécurité par suite des risques d'explosion.

Dans le procédé suivant la demande de brevet européen précitée, il y a lieu de soumettre l'acide phosphorique utilisé à une réduction préalable ce qui nécessite, en plus, une isolation de l'installation par rapport à l'air ambiant. Une telle isolation étant également exigée dans le procédé décrit par F.J. Hurst dans la revue industrielle "Industrial and Enginéering Chemistry".

Un des buts essentiels de la présente invention est de remédier à ces divers inconvénients et de procurer un procédé très simple dans lequel la teneur en fer dans la phase aqueuse est maintenue au minimum, évitant ainsi tout risque de précipitation.

A cet effet, suivant l'invention, on effectue le contact du fer métallique et de la phase aqueuse enrichie en uranium en mettant au moins une partie de ce fer métallique en mouvement par rapport à ladite phase aqueuse, de manière à créer une abrasion du fer.

Avantageusement, on soumet au moins une partie du fer métallique à une agitation dans la phase aqueuse précitée, en limitant la quantité d'air entraînée dans cette dernière.

L'invention concerne également une installation pour ré-extraire de l'uranium d'un extractant organique, pour la mise en oeuvre du procédé tel que décrit ci-dessus.

Cette installation comprend une série de mélangeurs-décanteurs successifs comportant chacun un compartiment de mélange muni d'un agitateur à effet de pompage, un compartiment de décantation, une gouttière pour évacuer la phase organique, une chambre de sortie munie d'un trop-plein, pour évacuer une partie de la phase aqueuse décantée, et un récipient destiné à contenir du fer métallique pouvant être mis en contact avec la phase aqueuse, la chambre de sortie étant reliée par une conduite de recyclage au compartiment de mélange permettant de recycler l'autre partie de la phase aqueuse.

Suivant l'invention, le récipient précité comprend des moyens pour mettre le fer métallique en mouvement et créer, d'une part, une abrasion de ce fer, et, d'autre part, un contact intime entre ce dernier et la phase aqueuse.

Avantageusement, ces moyens comprennent un agitateur permettant de brasser le fer métallique se présentant sous forme de morceaux, en contact intime les uns avec les autres dans la phase aqueuse, le

2

0 106 376

récipient précité présentant de préférence un passage d'admission à proximité de son fond et un passage d'évacuation au dessus du niveau du fer métallique.

D'autres détails et particularités de l'invention ressortiront de la description donnée ci-après, à titre d'exemple non limitatif, d'une forme de réalisation particulière de l'objet de l'invention avec référence aux dessins annexés.

La figure 1 représente un schéma d'une installation pour réaliser le procédé suivant la présente invention.

La figure 2 est une vue en plan, à plus grande échelle, d'une partie de cette installation.

La figure 3 est une vue en perspective, avec brisure partielle de cette même partie de l'installation.

Dans les différentes figures les mêmes éléments sont désignés par les mêmes chiffres de référence.

D'une façon générale, le procédé suivant l'invention pour ré-extraire de l'uranium d'un extractant comprenant un acide dialkylphisphorique et un oxyde de dialkylphosphine dissous dans un solvant organique non miscible à l'eau à l'aide d'une solution aqueuse d'acide phosphorique contenant des ions ferreux est réalisé en plusieurs étages successifs, chaque étage comprenant à son tour plusieurs étapes.

Dans une première étape, l'extractant dans le solvant organique est mis en contact avec la solution aqueuse d'acide phosphorique, dont une fraction est formée par de la solution recyclée chargée d'uranium. Lors de cette mise en contact se produit une phase organique appauvrie en uranium et une phase aqueuse d'acide phosphorique enrichie en uranium et en ions ferriques.

Ces deux phases sont alors séparés dans une deuxième étape et une fraction de la phase aqueuse enrichie en uranium résultant de cette deuxième étape est envoyée, au cours d'une troisième étape, vers la première étape.

Ensuite, dans une dernière étape, la teneur en ions ferreux de la fraction recyclée est ajustée en mettant la phase aqueuse enrichie en uranium et résultant de la deuxième étape en contact avec des morceaux de fer métallique mis en mouvement dans cette phase aqueuse, de manière à créer ainsi une abrasion dudit fer et former ainsi des particules minuscules et actives de fer entrant rapidement en solution pour réagir pratiquement instantanément avec des ions $Fe^{3+}$.

Les caractéristiques particulières de ce procédé seront décites ci-après au moyen de quelques exemples de réalisation concrets.

## Exemple 1.

On part d'un extractant organique constitué d'une solution de 0,5 M d'acide di-(2-éthylhexyl) phosphorique ($D_2$EHPA) et de 0,075 M d'oxyde de trioctylphosphine (TOPO) dans un diluant aliphatique inerte ("ESCAID-110" de la société ESS0 CHEMICAL Cy) contenant 235 mg/l de $U^{6+}$

Cet extractant a été utilisé pour extraire de l'uranium d'acide phosphorique produit par lixiviation à l'acide sulfurique de roches phosphatées uranifères.

On effectue la ré-extraction avec une solution aqueuse d'acide phosphorique à 37 % de $P_2O_5$ préparée par mélange d'acides phosphoriques à 30 % de $P_2O_5$ et 42 % de $P_2O_5$. Cette solution qui, suivant l'invention, n'a pas été pré-réduite contient environ 3 g/l de $Fe^{3+}$.

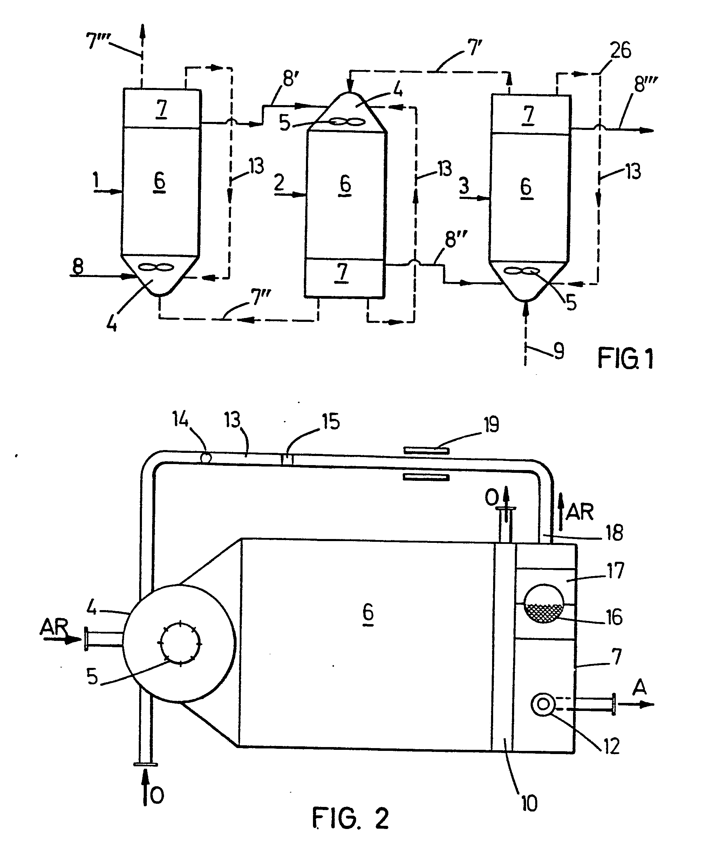

La ré-extraction est effectuée en trois étages en utilisant à cet effet trois mélangeurs-décanteurs identiques 1, 2 et 3 d'une installation montrée à la figure 1.

Chaque mélangeur-décanteur comporte un compartiment de mélange 4 muni d'un agitateur 5 à effet de pompage, un compartiment de décantation 6 et une chambre de sortie 7 pour l'évacuation des phases séparées.

L'extractant, dont il y a lieu d'enlever l'uranium, est introduit dans le compartiment de mélange 4 du mélangeur-décanteur 1, comme indiqué par la flèche 8, et quitte l'installation par la chambre de sortie 7 du mélangeur-décanteur 3.

Par contre, la solution de ré-extraction entre dans l'installation par le compartiment de mélange 4 du mélangeur-décanteur 3, comme indiqué par la flèche 9, et quitte cette installation par la chambre de sortie 7 du mélangeur-décanteur 1.

Le parcours suivi par l'extractant a été montré en traits pleins, tandis que le parcours suivi par la solution de ré-extraction a été montré en traits interrompus.

L'extractant est introduit en 8 de l'installation à un débit de 30 m³/h et à une température de l'ordre de 35°C, tandis que la solution de ré-extraction est introduite en 9 à un débit de 882 l/h et à une température de l'ordre de 50°C.

L'extractant, entrant en 8 dans le compartiment 4 du mélangeur-décanteur 1, quitte la chambre 7 de ce dernier par une conduite 8' pour entrer ensuite dans le compartiment de mélange 4 du mélangeur-décanteur 2 et quitter celui-ci par une conduite 8'' vers le compartiment de mélange 4 du mélangeur-décanteur 3. L'extractant est enfin évacué de l'installation par la chambre 7 de ce dernier mélangeur-décanteur, comme montré par la flèche 8'''.

La solution de ré-extraction, qui entre en 9 dans le compartiment de mélange 4 du mélangeur-décanteur 3, se sépare en deux circuits dans la chambre 7, une partie étant recyclée vers le compartiment 4 du même mélangeur-décanteur, à travers une conduite de recyclage 13, tandis que l'autre partie passe au compartiment de mélange 4 du mélangeur-décanteur précédent 2, à travers la conduite 7'.

3

# 0 106 376

D'une façon analogue, à la sortie de la chambre 7 une partie de cette solution est recyclée vers le même compartiment de mélange tandis que l'autre partie est transférée au compartiment de mélange du premier mélangeur-décanteur 1 par la conduite de recyclage 7".

A la sortie de la chambre 7 du mélangeur-décanteur 1, une partie est à nouveau recyclée vers le compartiment 4 du même décanteur, tandis que l'autre partie est évacuée de l'installation par la conduite 7"'.

Etant donné que le rapport phase organique/ phase aqueuse est, dans cet exemple concret, de 30.000/ 682 et qu'il faut maintenir la phase aqueuse comme phase continue pendant la ré-extraction, la plus grande partie de la phase aqueuse est recyclée par la conduite de recyclage 13 et seulement une mineure partie passe au mélangeur-décanteur suivant, comme indiqué par les références 7' et 7" ou est évacuée de l'installation comme indiqué par la référence 7".

Chacun des étages décrits ci-dessus est donc réalisé dans un des mélangeurs-décanteurs 1, 2 et 3.

Avantageusement, on ajoute le fer métallique à chaque étage dans la chambre de sortie 7 des trois mélangeurs-décanteurs.

Dans ces chambres, au moins une partie de ce fer métallique est soumis à une agitation dans la phase aqueuse d'une manière telle à limiter au strict minimum la quantité d'air entraînée dans cette phase.

Afin d'obtenir, d'une part, un effet abrasif suffisant, une consommation d'énergie aussi réduite que possible et un entraînement minimum de particules de fer solide dans la phase aqueuse à travers la conduite 13, on utilise des morceaux de fer dont le diamètre moyen varie de préférence entre et 5 et 30 mm pour au moins 50 % en poids de la quantité totale de fer mis en oeuvre.

De plus, pour assurer un contact aussi intime que possible avec la solution aqueuse, on maintient au moins une partie du fer métallique en suspension dans celle-ci.

La quantité de fer métallique ajoutée à la phase aqueuse de chaque étage correspond sensiblement à la quantité en poids d'uranium à réduire à l'étage considéré, avec un excès de 50 à 100 % en fer.

Par ailleurs, on utilise, avantageusement, comme solution de ré-extraction une solution aqueuse d'acide phosphorique à 35 à 45 % en poids de $P_2O_5$ à son état d'oxydo-réduction naturelle, contenant par exemple au moins 75 % en poids de fer sous forme de $Fe^{3+}$.

La température est maintenue dans les trois mélangeurs-décanteurs entre 40 et 55°C et de préférence entre 45 et 55°C, de manière à obtenir un coefficient de répartition de $U^{4+}$ entre la phase aqueuse et la phase organique aussi élevé que possible et assurer une réaction rapide entre la phase aqueuse et le fer métallique.

Dans le cas du présent exemple, en régime, on ajoute 1 kg/h de fer métallique dans le mélangeur-décanteur 3,3 kg/h dans le mélangeur-décanteur 2 et 8 kg/h dans le mélangeur-décanteur 1.

Les concentrations en uranium, $Fe^{2+}$ et $Fe^{3+}$, sont les suivantes:

U (ppm); $Fe^{2+}$ g/l, $Fe^{3+}$ g/l
Mélangeur-décanteur 1 7500 ppm 10 g/l 10 g/l
Mélangeur-décanteur 2 4000 ppm 6 g/l 10 g/l
Mélangeur-décanteur 3 1000 ppm 2,5 g/l 6 g/l

Dans ces conditions, on constate que l'extractant sort en 8"' du mélangeur-décanteur 3 avec une teneur en uranium inférieure à 5 ppm et même de l'ordre de 1 ppm.

Cet extractant peut alors être réutilisé pour extraire l'uranium de l'acide phosphorique produit par lixiviation à l'acide sulfurique de roches phosphatées uranifères.

L'uranium peut être récupéré de la phase aqueuse sortant en 7"' suivant un procédé connu tel que décrit déjà ci-dessus.

## Exemple 2.

On utilise le raffinat provenant de l'opération d'extraction d'uranium, c'est-à-dire l'acide phosphorique provenant de l'attaque sulfurique du phosphate, que l'on a oxydé et dont on a extrait l'uranium à l'aide de solvants $D_2EHPA$-TOPO suivant le procédé bien connu. Cet acide phosphorique contient 2,2 g/l de fer, se répartissant en 0,3 g/l $Fe^{2+}$ et 1,9 g/l $Fe^{3+}$.

La température est de 54°C. Après passage dans l'installation représentée à la figure 1, l'acide contient 13,5 g/l de Fe, dont 13 g/l de $Fe^{2+}$ et 0,5 g/l de $Fe^{3+}$.

## Exemple 3.

L'acide de départ est le raffinat provenant du deuxième cycle de 1 extraction d'uranium, c'est-à-dire la phase aqueuse chargée en uranium sortant de la ré-extraction dont, après oxydation, on a extrait l'uranium à l'aide des solvants $D_2EHPA$-TOPO suivant le procédé connu. Cet acide contient 14,3 g/l de Fe dont 0,5 g/l de $Fe^{2+}$ et 13,8 g/l de $Fe^{3+}$. La température de travail est de 52°C. Après passage dans l'installation représentée à la figure 1, l'acide contient 24 g/l de Fe dont 17,2 g/l de $Fe^{2+}$ et 6.8 g/l de $Fe^{3+}$.

Ces exemples montrent que le procédé permet de dissoudre la mitraille de façon à retrouver le fer en solution essentiellement sous forme de $Fe^{2+}$ mais aussi de réduire en $Fe^{2+}$ une proportion appréciable du

4

$Fe^{3+}$ présent dans l'acide de départ.

Ceci est obtenu essentiellement grâce au fait que, suivant l'invention, on effectue la dissolution de la mitraille de fer de façon dynamique permettant ainsi de réduire la réaction du fer dissous, qui a été réoxydé soit par le méchanisme d'oxydoréduction:

$$2\,Fe^{2+} + U^{6+} \rightarrow 2\,Fe^{3+} + U^{4+} \quad (1)$$

soit par simple contact avec l'air.

Le $Fe^{2+}$ est obtenu par dissolution de mitraille dans l'acide phosphorique suivant la réaction:

$$3\,Fe + 6\,H^+ \rightarrow 4\,Fe^{2+} + 3\,H_2 \quad (2)$$

et encore par la réduction du fer ferrique, produit par la réaction avec le $U^{6+}$ suivant la réaction (1), qui a lieu comme suit:

$$Fe + 2\,Fe^{3+} \rightarrow 3\,Fe^{2+} \quad (3)$$

Le procédé suivant l'invention consiste à favoriser la réaction (3) au détriment de la réaction (2) en mettant, par abrasion, des microparticules de fer actif en solution pouvant réagir directement avec le $Fe^{3+}$.

Contrairement à ce qui est le cas pour les procédés connus, le fer ne se dissout donc pas essentiellement par attaque acide, mais surtout par ce phénomène d'abrasion.

Un autre avantage de la présente invention est de permettre l'utilisation de mitrailles grossières et à faible prix telles que provenant d'opérations de perforation, poinçonnage etc., sans limitation de surface spécifique, comme c'est par exemple la cas dans le procédé décrit par la demande de brevet européen 0031172.

Le procédé tel que décrit ci-dessus et notamment dans les exemples peut avantageusement être mis en oeuvre au moyen d'une installation représentée schématiquement aux figures 1 à 3.

Comme déjà signalé ci-dessus, cette installation comprend une série de mélangeurs-décanteurs successifs, qui sont au nombre de trois dans cette forme de réalisation déterminée, comportant chacun un compartiment de mélange 4 muni d'un agitateur 5 à effet de pompage, un compartiment de décantation 8 et une chambre de sortie 7, dans laquelle du fer métallique est introduit à intervalles réguliers.

Entre le compartiment de décantation 6 et la chambre de sortie 7 est prévue une gouttière 10 pour évacuer la phase organique, la phase aqueuse, formant la phase inférieure décantée, passe en dessous de cette goutière dans la chambre de sortie 7, comme indiqué par la flèche A.

Une partie de cette phase aqueuse est évacuée par un trop-plein 26 vers la canalisation 7', 7'' ou 7''' suivant qu'il s'agisse du mélangeur-décanteur 3, 2 ou 1 respectivement (voir figure 1).

L'autre partie de la phase aqueuse traverse un récipient 16 contenant le fer métallique 22, dont question ci-dessus.

La partie de la phase aqueuse ayant traversée le récipient 16 est alors recyclée à travers la conduite de recyclage 13.

Suivant l'invention, des moyens sont prévus pour mettre le fer métallique 22 en mouvement et créer, d'une part, une abrasion de ce fer et, d'autre part un contact intime entre ce dernier et la phase aqueuse traversant le récipient 16.

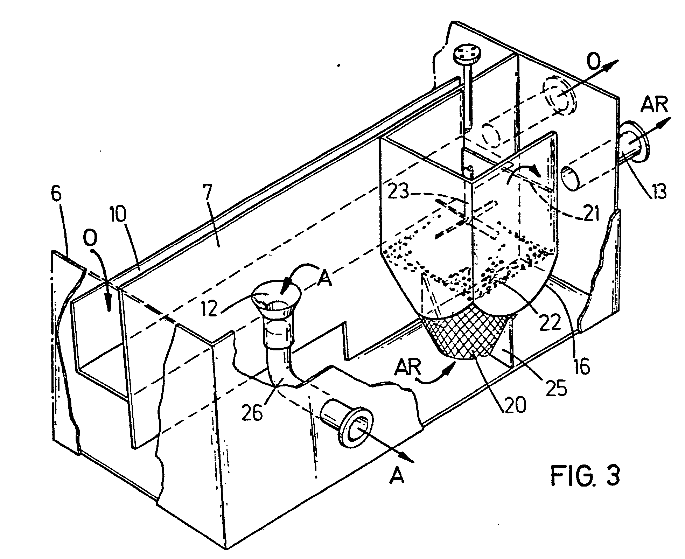

Ces moyens sont, dans la forme de réalisation montrée aux figures 2 et 3, formés par un agitateur 23 permettant de brasser les morceaux de fer contenus dans le récipient 1, en contact intime les uns avec les autres, et provoquant ainsi l'abrasion précitée.

La phase aqueuse entre dans le récipient 16 à proximité de son fond par un passage d'admission dans lequel est prévu une grille 20 ou autre moyen perméable à la phase aqueuse pour retenir le fer métallique dans le récipient 16.

La phase aqueuse traverse le récipient de bas en haut pour déborder au dessus d'un seuil de déversement 21 et s'écouler vers la conduite de recyclage 13.

Le sens de l'écoulement de la phase aqueuse recyclée est indiqué par les flèches AR, tandis que l'écoulement de la phase organique dans la chambre 7 a été indiqué par les flèches O.

Comme montré schématiquement à la figure 2, chacune des conduites de recyclage 13 est entourée d'un élément de chauffe 19, par exemple à la vapeur.

Cette conduite 13 est de plus munie d'une vanne 14 permettant de régler le débit du courant recyclé.

Enfin, la teneur en $Fe^{2+}$ est déterminée des périodes régulières, notamment toutes les heures, par exemple par mesure au moyen d'un colorimètre sur un échantillon prélevé en un point quelconque du circuit, par exemple au point 15.

Lorsque le système est en régime la quantité de fer à ajouter dans le récipient 16 est prédéterminé par la quantité d'uranium résiduel dans l'extractant et il n'est plus nécessaire de faire varier la fréquence de l'addition du fer.

Cette addition peut être réalisée manuellement ou par tout système mécanique usuel de pesée et de dosage.

Il est bien entendu que des variantes à la forme de réalisation décrite peuvent être envisagées.

C'est ainsi, par exemple, que le nombre de mélangeurs-décanteurs peut varier suivant la nature de l'extractant à traiter et que le récipient contenant le fer métallique peut présenter une construction sensiblement différente.

## Revendications

1. Procédé pour ré-extraire, en plusieurs étages successifs, de l'uranium d'un extractant comprenant un acide dialkylphosphorique et un oxyde de trialkylphosphine dissous dans un solvant organique non miscible à l'eau, à l'aide d'une solution aqueuse d'acide phosphorique contenant des ions ferreux, chaque étage comprenant les étapes suivantes:

a) la mise en contact de l'extractant dans le solvant organique avec la solution aqueuse d'acide phosphorique, une fraction de cette solution aqueuse étant formée par de la solution recyclée chargée d'uranium, en produisant ainsi une phase organique appauvrie en uranium et une phase aqueuse d'acide phosphorique enrichie en uranium et en ions ferriques;

b) la séparation de la phase organique appauvrie en uranium de la phase aqueuse enrichie en uranium

c) le recyclage d'une fraction de la phase aqueuse enrichie en uranium résultant de l'étape (b) vers l'étape (a) et

d) l'ajustage de la teneur en ions ferreux de la fraction recyclée en mettant la phase aqueuse enrichie en uranium et résultant de l'étape (b) en contact avec du fer métallique,

ce procédé étant caractérisé en ce qu'on effectue le contact du fer métallique et de la phase aqueuse enrichie en uranium en mettant au moins une partie de ce fer métallique en mouvement par rapport à ladite phase aqueuse, de manière à créer une abrasion du fer.

2. Procédé suivant la revendication 1, caractérisé en ce qu'on ajoute du fer métallique à chaque étage.

3. Procédé suivant l'une ou l'autre des revendications 1 ou 2, caractérisé en ce qu'on soumet au moins une partie du fer métallique à une agitation dans la phase aqueuse précitée, en limitant la quantité d'air entraînée dans cette dernière.

4. Procédé suivant l'une ou l'autre des revendications 1 ou 2, caractérisé en ce qu'on utilise des morceaux de fer dont le diamètre moyen varie entre 5 et 30 mm pour au moins 50% en poids de la quantité totale du fer mise en oeuvre.

5. Procédé suivant l'une quelconque des revendications précitées, caractérisé en ce qu'on maintient au moins une partie du fer métallique en suspension dans la phase aqueuse.

6. Procédé suivant l'une quelconque des revendications 2 à 5, caractérisé en ce qu'on ajoute une quantité de fer métallique à la phase aqueuse de chaque étage correspondant sensiblement à la quantité en poids d'uranium à réduire à l'étage considéré avec un excès de 50 à 100% en fer.

7. Procédé suivant l'une quelconque des revendications 1 à 5, caractérisé en ce qu'on effectue la ré-extraction avec une solution aqueuse d'acide phosphorique à son état d'oxydo-réduction naturel, contenant par exemple au moins 75 % en poids de fer sous forme de $Fe^{+++}$.

8. Procédé suivant l'une quelconque des revendications précédentes, caractérisé en ce qu'on effectue la ré-extraction de l'uranium au moyen d'une solution aqueuse d'acide phosphorique de 35 à 45 % en poids de $P_2O_5$.

9. Procédé suivant l'une quelconque des revendications précédentes, caractérisé en ce qu'on effectue la ré-extraction de l'uranium à une température de l'ordre de 40 à 55° C.

10. Procédé suivant l'une quelconque des revendications 1 à 9, caractérisée en ce qu'on maintient la teneur en $Fe^{++} + Fe^{+++}$ dans la solution aqueuse d'acide phosphorique enrichie en uranium et sortant de la dernière étape inférieure à 25 g/l.

11. Installation pour ré-extraire l'uranium d'un extractant organique, pour la mise en oeuvre du procédé suivant l'une quelconque des revendications précédentes, comprenant une série de mélangeurs-décanteurs successifs (1, 2, 3) comportant chacun un compartiment de mélange (4) muni d'un agitateur (5) à effet de pompage, un compartiment de décantation (8), une gouttière (10) pour évacuer la phase organique, une chambre de sortie (7) munie d'un trop-plein (26) pour évacuer une partie de la phase aqueuse décantée et un récipient (16) destiné à contenir du fer métallique (22) pouvant être mis en contact avec la phase aqueuse, la chambre de sortie (7) étant reliée par une conduite de recyclage (13) au compartiment de mélange (4) permettant de recycler l'autre partie de la phase aqueuse, caractérisée en ce que le récipient (16) comprend des moyens (23) pour mettre le fer métallique (22) en mouvement et créer, d'une part, une abrasion de ce fer, et, d'autre part, un contact intime entre ce dernier et la phase aqueuse.

12. Installation suivant la revendication 11, caractérisée en ce que le récipient (16) destiné à contenir du fer métallique (22) est monté dans la chambre de sortie (7), à proximité de l'évacuation vers la conduite de recyclage (13).

13. Installation suivant l'une ou l'autre des revendications 11 et 12, caractérisée en ce que les moyens pour mettre des morceaux de fer métallique (22) en mouvement dans le récipient (16) précité comprennent un agitateur (23) permettant de brasser ces morceaux de fer (22) en contact intime les uns avec les autres dans ladite phase aqueuse.

14. Installation suivant l'une quelconque des revendications 11 à 13, caractérisée en ce que le récipient (18) précité présente un passage d'admission de la phase aqueuse à proximité de son fond et un passage d'évacuation au dessus du niveau du fer métallique dans le récipient, de manière à créer un courant ascendant de la phase aqueuse à travers le fer (22).

15. Installation suivant la revendication 14, caractérisée en ce qu'une grille (20) est prévue dans le passage d'admission pour retenir le fer métallique (22) dans ledit récipient (16).

16. Installation suivant l'une ou l'autre des revendications 14 et 15, caractérisée en ce que le passage d'évacuation présente unseuil de déversement (21) au dessus duquel la phase aqueuse, chargée par du fer en solution, peut s'écouler vers la conduite de recyclage (13).

**Patentansprüche**

1. Verfahren zur mehrstufigen Reextraktion von Uran aus einem Extraktionsmittel, das, gelöst in einem mit Wasser nicht mischbaren organischen Lösungsmittel, Dialkylphosphorsäure und ein Trialkylphosphinoxid enthält, unter Verwendung einer Eisenionen enthaltenden wässrigen Lösung von Phosphorsäure, bei welchem Verfahren jede Stufe die folgenden Schritte umfaßt:

a) Die organische Lösung des Extraktionsmittels wird mit der wässrigen Phosphorsäurelösung, von der ein Teil durch uranhaltige, rückgeführte Lösung gebildet wird, in Kontakt gebracht, wodurch eine an Uran verarmte organische Phase und eine mit Uran und Eisenionen angereicherte wässrige Phosphorsäure-Phase entsteht,

b) die an Uran verarmte organische Phase und die mit Uran angereicherte wässrige Phase werden voneinander getrennt,

c) ein Anteil der im Schritt b) erhaltenen, mit Uran angereicherten wässrigen Phase wird in den Schritt a) zurückgeführt und

d) die im Schritt b) gewonnene, mit Uran angereicherte wässrige Phase wird zum Einstellen des Gehaltes an Eisenionen in dem rückgeführten Anteil mit metallischem Eisen in Kontakt gebracht, dadurch gekennzeichnet, daß

der Kontakt zwischen dem metallischen Eisen und der mit Uran angereicherten wässrigen Phase hergestellt wird, indem man wenigstens einen Teil des Eisens gegenüber der genannten wässrigen Phase in Bewegung setzt, so daß ein Abrieb von Eisen stattfindet.

2. Verfahren nach Anspruch 1, dadurch gekennzeichnet, daß in jeder Stufe Eisen hinzugefügt wird.

3. Verfahren nach Anspruch 1 oder 2, dadurch gekennzeichnet, daß wenigstens ein Teil des metallischen Bisens in der vorgenannten wässrigen Phase in Bewegung gehalten und dabei die von der Lösung mitgeführte Luftmenge begrenzt wird.

4. Verfahren nach Anspruch 1 oder 2, dadurch gekennzeichnet, daß man für mindestens 50 Gew.% der Gesamtmenge des eingesetzten Eisens Eisenstücke mit einem mittleren Durchmesser von 5 bis 30 mm verwendet.

5. Verfahren nach einem beliebigen der vorhergehenden Ansprüche, dadurch gekennzeichnet, daß wenigstens ein Teil des metallischen Eisens in der wässrigen Phase in Suspension gehalten wird.

6. Verfahren nach einem beliebigen der Ansprüche 2 bis 5, dadurch gekennzeichnet, daß in jeder Stufe zu der wässrigen Phase eine Menge an metallischem Eisen hinzugefügt wird, deren Gewicht im wesentlichen der in der jeweiligen Stufe zu reextrahierenden Menge Uran mit einem Überschuß an 50 bis 100 % Eisen entspricht.

7. Verfahren nach einem beliebigen der Ansprüche 1-bis 5, dadurch gekennzeichnet, daß die Reextraktion mit einer wässrigen Phosphorsäurelösung im natürlichen Redox-Zustand erfolgt, die beispielsweise mindestens 75 Gew.% Eisen in Form von $Fe^{+++}$ enthält.

8. Verfahren nach einem beliebigen der vorhergehenden Ansprüche, dadurch gekennzeichnet, daß die Heextraktion des Urans mittels einer wässrigen Phosphorsäurelösung erfolgt, die 35 bis 45 Gew.% $P_2O_5$ enthält.

9. Verfahren nach einem beliebigen der vorhergehenden Ansprüche, dadurch gekennzeichnet, daß die Reextraktion bei einer Temperatur im Bereich von 40 bis 55° C erfolgt.

10. Verfahren nach einem beliebigen der Ansprüche 1 bis 9, dadurch gekennzeichnet, daß der Gehalt an Fe und $Fe^{+++}$ der mit Uran angereicherten wässrigen Phosphorsäurelösung, welche die letzte Stufe verläßt, auf insgesamt weniger als 25 g/l gehalten wird.

11. Anlage zur Reextraktion von Uran aus einem organischen Extraktionsmittel unter Anwendung des Verfahrens nach einem beliebigen der vorhergehenden Ansprüche, mit einer Reihe aufeinanderfolgender Misch/Trenn-Apparate (1, 2, 3), von denen jeder eine mit einem Rührer (5) mit Förderwirkung versehene Mischkammer (4), eine Absetzkammer (6), eine Rinne (10) zum Abführen der organischen Phase, eine Ausgangskammer (7) mit Uberlauf (26) zum Abführen eines Teiles der abgesetzten wässrigen Phase und einen Behälter (16) umfaßt, der zur Aufnahme des metallischen Eisens (22) dient, das mit der wässrigen Phase in Kontakt gebracht werden kann, wobei die Ausgangskammer (7) mit der Mischkammer (4) durch eine Rückführleitung (13) verbunden ist, die ein Rückführen des anderen Teiles der wässrigen Phase ermöglicht,

dadurch gekennzeichnet,

daß der Behälter (16) Mittel (23) enthält, mit denen das metallische Eisen (22) in Bewegung versetzbar und einerseits ein Abrieb des Eisens verursacht und andererseits ein inniger Kontakt zwischen dem Eisen und der wässrigen Phase hergestellt werden kann.

12. Anlage nach Anspruch 11, dadurch gekennzeichnet, daß der zur Aufnahme des metallischen Eisens (22) bestimmte Behälter (16) in der Ausgangskammer (7) nahe dem Anschluß der Rückführleitung (13) angeordnet ist.

13. Anlage nach Anspruch 11 oder 12, dadurch gekennzeichnet, daß die Mittel, mit denen die Stücke des metallischen Eisens (22) im Behälter (16) in Bewegung versetzbar sind, einen Rührer (23) umfassen, der es gestattet, die Eisenstücke in innigem Kontakt miteinander in der wässrigen Phase umzurühren.

14. Anlage nach einem beliebigen der Ansprüche 11 bis 13, dadurch gekennzeichnet, daß der genannte Behälter (16) nahe seinem Boden einen Einlauf für die wässrige Phase und oberhalb der Menge des im Behälter vorhandenen metallischen Eisens einen Auslauf aufweist, sodaß ein das Eisen durchquerender aufsteigender Strom der wässrigen Phasen erzeugt wird.

15. Anlage nach Anspruch 14, dadurch gekennzeichnet, daß der Einlauf mit einem Gitter (20) versehen ist, um das metallische Eisen (22) im Behälter (16) zurückzuhalten.

16. Anlage nach Anspruch 14 oder 15, dadurch gekennzeichnet, daß der Auslauf eine Überlaufkante (21) aufweist, uber die hinweg die mit gelöstem Eisen beladene wässrige Phase in die Rückführleitung (13) abfließen kann.

## Claims

Method for re-extracting in several succeeding stages, uranium from an extractant comprising a dialkyl phosphoric acid and a trialkyl phosphine dissolved into an organic solvent unmiscible in water, by means of a phosphoric acid aqueous solution containing ferrous ions, each stage comprising the following steps:

a) contacting the extractant in the organic solvent with the phosphoric acid aqueous solution, a fraction from said aqueous solution being formed by the re-cycled uranium-loaded solution, thus producing an uranium-poor organic phase and a phosphoric acid aqueous phase enriched with uranium and ferric ions:

b) separating the uranium-poor organic phase from the uraniumrich aqueous phase;

c) cycling a fraction from the uranium-rich aqueous phase resulting from step (b), back to step (a), and

d) adjusting the ferrous ion content of the re-cycled fraction by contacting the uranium-rich aqueous phase resulting from step (b), with metal iron,

this method being characterized in that contacting metal iron with the uranium-rich aqueous phase is performed by moving part at least of said metal iron relative to said aqueous phase, so as to cause iron abrading.

2. Method according to claim I, characterized in that metal iron is added to every stage.

3. Method according to either one of claims 1 and 2, characterized in that one subjects part at least of the metal iron to a stirring in said aqueous phase, while limiting the amount of air being carried along therein.

4. Method according to either one of claims 1 and 2, characterized in that use is made of iron pieces the mean diameter of which varies between 5 and 30 mm for at least 50% by weight from the total amount iron being worked.

5. Method according to any one of the preceding claims. characterized in that one retains part at least of the metal iron in suspension in the aqueous phase.

6. Method according to any one of the claims 2 to 5. characterized in that one adds some amount metal iron to the aqueous phase in every stage, which corresponds substantially to the amount by weight of uranium to be reduced in the stage under consideration with an iron excess from 50 to 100%.

7. Method according to any one of the claims 1 to 5, characterized in that one performs the re-extracting with a phosphoric acid aqueous solution in the natural oxidation reduction condition thereof, containing for example at least 75% by weight of iron in the form of $Fe^{+++}$.

8. Method according to any one of the preceding claims, characterized in that one performs the uranium re-extracting by means of a phosphoric acid aqueous solution with 35 to 45% by weight $P_2O_5$.

9. Method according to any one of the preceding claims, characterized in that one performs the uranium re-extracting at a temperature in the range from 40 to 55°.

10. Method according to any one of the claims 1 to 9, characterized in that one retains the $Fe^{++} + Fe^{+++}$ content in the uranium-rich phosphoric acid aqueous solution leaving the last stage, lower than 25 g/l.

11. Plant for re-extracting uranium from an organic extractant, for the working of the method according to any one of the preceding claims, comprising a series of succeeding mixer-decanters (1, 2, 3) each having a mixing compartment (4) provided with a stirrer (5) with pumping action, a decanting compartment (6), a trough (10) for discharging the organic phase, an outlet chamber (7) provided with an overflow (26) to discharge part of the decanted aqueous phase and a container (16) intended to contain metal iron (22) which may be contacted with the aqueous phase, the outlet chamber (7) being connected through a re-cycling line (13) to the mixing compartment (4) allowing to re-cycle the other part from the aqueous phase. characterized in that the container (16) comprises means (23) for moving the metal iron (22) and causing on the one hand abrading of said iron, and on the other hand intimate contacting between said latter one and the aqueous phase.

12. Plant according to claim 11, characterized in that the container (16) intended to contain metal iron (22), is mounted inside the outlet chamber (7), adjacent to the discharge towards the re-cycling line (13).

13. Plant according to either one of claims 11 and 12, characterized in that the means for moving the pieces from metal iron (22) inside said container (16), comprise a stirrer (23) allowing to mix said iron pieces (22) in intimate contact with one another, inside said aqueous phase.

14. Plant according to any one of claims 11 to 13, characterized in that said container (16) has an inlet passageway for the aqueous phase adjacent the bottom thereof and a discharge passageway above the metal iron level inside the container, so as to generate an upward flow of the aqueous phase through the iron (22).

15. Plant according to claim 14, characterized in that a grate (20) is provided in the inlet passageway to retain the metal iron (22) inside said container (16).

16. Plant according to either one of claims 14 and 15, characterized in that the discharge passageway has an overflow sill (21) whereabove the aqueous phase loaded with iron in solution, may flow to the re-cycling line (13).

FIG 1

FIG. 2

1

FIG. 3